# FASCICULE DE BREVET EUROPEEN

(11) **EP 0 526 291 B1**
(45) Date de publication et mention de la délivrance du brevet: **16.08.1995**
(21) Numéro de dépôt: 92401988.8
(22) Date de dépôt: 09.07.1992
(51) Int. Cl.: G01B 9/021, G01B 9/025, G03H 1/28

(54) **Mesure de déplacements tridimensionnels par holographie**
Drei-dimensionale Verschiebungsmessung durch Holographie
Three-dimensional displacement measurement by means of holography

(30) Priorité: 02.08.1991 FR 9109849
(43) Date de publication de la demande: 03.02.1993
(73) Titulaire: AUTOMOBILES PEUGEOT, 75116 Paris (FR); AUTOMOBILES CITROEN, 92200 Neuilly-sur-Seine (FR)
(72) Inventeur: Linet, Virginie, F-75014 Paris (FR); Bohineust, Xavier, F-75015 Paris (FR); Pedrini, Giancarlo, CH-6763 Osco (CH)
(74) Mandataire: Robert, Jean-François

(56) Documents cités:
- DE-A- 3 307 798
- C.R. ACAD. SC. B. vol. 273, no. 22, 29 novembre 1971, Paris, FR, pages 941-943, M. NOVARO, F. PERRIN: "Camera holographique ultra-rapide"
- OPTICS COMMUNICATIONS, vol. 41, no. 4, avril 1982, Amsterdam, NL, pages 233-238, K.D. MERBOLDT, W. LAUTERBRONN: "High-speed holocinematography with acoustooptic light deflection"
- J. PHYSICS D: APPL. PHYS., vol. 11, no. 2, février 1978, Letchworth, GB, pages 177-180, T. TSCHUDI et al: "A study of high-power laser effects in dielectrics using multiframe picosecond holography"
- PATENT ABSTRACTS OF JAPAN vol. 7, no. 202 (P-221)(1347) 7 septembre 1983 & JP-A-58 100 719
- APPLIED OPTICS, vol. 12, no. 9, septembre 1973, New York, NY, US, pages 2009-2011, R.A. LESSARD et al: "New Technique of Color Holography"

## Description

L'invention a pour objet un procédé de mesure de déplacements tridimensionnels par holographie et s'applique plus particulièrement à l'étude de pièces soumises à des vibrations.

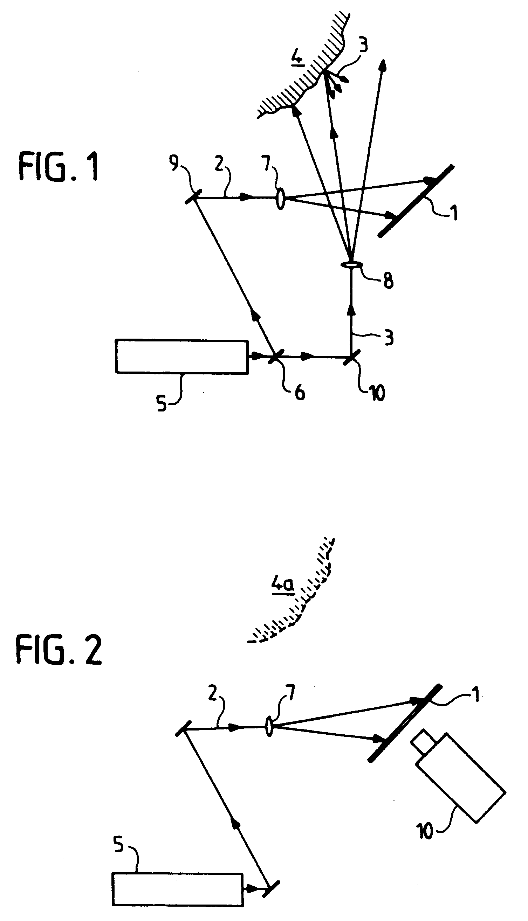

On rappellera ici que le principe de l'holographie consiste à enregistrer sur un support photosensible 1 (figure 1) les interférences entre un faisceau laser de référence 2 et un faisceau d'illumination ou faisceau objet 3 diffusé par l'objet à étudier 4. Pour des raisons de cohérence, le faisceau de référence 2 et le faisceau objet 3 sont issus d'une même source laser 5 grâce à un séparateur 6 tel qu'une lame semi-réfléchissante. Des lentilles ou systèmes optiques analogues 7 et 8 servent à faire diverger les faisceaux 2 et 3 respectivement afin de couvrir la plus grande surface possible de la plaque 1 et de l'objet 4. Des miroirs tels que les miroirs 9 et 10 servent à dévier et guider les faisceaux 2 et 3.

La restitution de l'hologramme se produit lorsqu'on illumine le support 1 (figure 2) avec un faisceau laser ayant les mêmes caractéristiques et la même orientation que le faisceau de référence utilisé pour l'enregistrement (on peut utiliser la même source laser 5). En regardant à travers la plaque 1 depuis le côté opposé à celui qui a été impressionné, on aperçoit l'image virtuelle 4a de l'objet; cette observation peut également se faire à l'aide d'une caméra 10.

L'interférométrie holographique par double exposition consiste à enregistrer deux hologrammes d'un même objet à deux instants différents sur la même plaque holographique. A la restitution, les deux hologrammes sont reconstruits par la même source laser et donnent des franges d'interférence caractéristiques des déformations de la structure entre les deux expositions.

Cependant, seule la projection des déplacements suivant une direction est obtenue: il s'agit de la bissectrice entre la direction d'illumination et la direction d'observation, c'est-à-dire entre le faisceau objet incident et le faisceau objet diffracté (pour un point de la plaque et un point de l'objet donnés).

Or, pour caractériser le comportement d'un objet soumis par exemple à des vibrations, il est nécessaire de connaître la déformation réelle, donc de mesurer les déplacements suivant plusieurs directions, généralement trois. La connaissance des trois composantes permet de déterminer le déplacement ou la déformation. Pour cela, on enregistre trois hologrammes de l'objet avec trois directions d'illumination non coplanaires. Pour éviter que ces hologrammes n'interfèrent entre eux, on introduit des lignes à retard de quelques mètres dans le montage optique entre chaque paire de faisceaux (faisceau de référence et faisceau objet).

De plus, les trois hologrammes doivent être séparés spatialement sur le support photosensible. L'analyse des franges par ordinateur, lors de la restitution, s'effectue par l'intermédiaire d'une caméra qui visualise l'objet reconstruit à travers l'hologramme. Avec ce système, la caméra doit être déplacée pour chaque hologramme. Ce changement de position amène un changement dans la perspective de l'objet, qui est facteur d'erreurs. Une solution possible consiste à répartir spatialement les trois hologrammes sur la plaque holographique, afin qu'ils soient tous contenus dans l'ouverture de l'objectif de la caméra (diamètre d'environ 20 mm).

Cette méthode est utilisée avec un laser continu qui est plus facile à manipuler qu'un laser pulsé, mats les temps d'exposition sont longs (de l'ordre de plusieurs secondes), ce qui interdit pratiquement d'étudier une pièce soumise à des vibrations dont la fréquence peut aller de quelques dizaines de Herz à quelques dizaines de kiloherz.

L'invention a pour but d'éliminer ces inconvénients en proposant un procédé de mesure de déformations d'une pièce par interférométrie holographique qui permet d'effectuer ces mesures suivant plusieurs directions simultanément et sans déplacer ni la plaque photosensible, ni la caméra utilisée pour la restitution, et qui permet en outre d'étudier une pièce soumise à des vibrations.

Plus précisément, le procédé objet de l'invention est un procédé de mesure de déplacements ou de déformations d'une pièce, notamment de mesure de déplacements tridimensionnels d'une pièce soumise à des vibrations, par interférométrie holographique, dans lequel on enregistre, sur une même plaque photosensible, deux hologrammes de la pièce correspondant à deux états différents de celle-ci et, pour un état donné, autant d'hologrammes que de directions d'illumination choisies, chaque hologramme étant obtenu, par interférence, sur la plaque, entre un faisceau de référence et un faisceau objet renvoyé par la pièce, les deux faisceaux étant issus d'une même source laser pulsée.

Le document DE-A-3307798 décrit un procédé de ce type dans lequel on utilise au moins quatre faisceaux de référence et un seul faisceau objet, l'observation étant faite à l'aide d'au moins quatre caméras ou quatre plaques holographiques séparées.

Le document J. PHYSICS D: APPL. PHYS. vol. 11,N°2, Février 1978, pages 177-180. T. TSCHUDI ET AL "A study of high-power laser effects in dielectrics using multiframe picosecond holography" décrit un procédé dans lequel on utilise plusieurs faisceaux objets traversant la cible sous des angles différents en introduisant des retards entre les différents couples faisceau de référence-faisceau objet pour obtenir des hologrammes ou interférogrammes décalés dans le temps.

Selon la principale caractéristique du procédé objet de l'invention, on enregistre simultanément les interférogrammes correspondant aux différentes directions d'illumination choisies.

S'il s'agit d'étudier une pièce soumise à des vibrations, l'intervalle entre deux pulses consécutifs de la source laser est inférieur à la période des vibrations.

Selon une autre caractéristique de ce procédé, les faisceaux de référence correspondant à chaque direction d'observation sont issus d'un même faisceau émis par la source laser et séparés à l'aide de lames semi-réfléchissantes et parcourent des distances différentes afin d'être retardés les uns par rapport aux autres.

Dans ce cas, les faisceaux objet sont issus d'un même faisceau émis par la source laser et guidés jusqu'à la pièce de sorte qu'ils parcourent, de la source laser à la plaque, les mêmes distances que les faisceaux de référence, afin qu'un faisceau objet correspondant à une direction d'illumination interfère toujours avec le faisceau de référence ayant parcouru la même distance.

Selon un premier mode de mise en oeuvre de ce procédé, les faisceaux de référence sont recombinés et confondus avant de frapper la plaque , un masque percé d'au moins une ouverture étant interposé sur chacun d'eux et orienté de sorte qu'une partie donnée de l'hologramme corresponde à une direction d'illumination donnée.

Suivant une forme particulière de réalisation, les masques se présentent sous la forme de plaques sensiblement circulaires en matériau opaque et percées d'ouvertures en forme de secteurs circulaires.

Le mot "opaque" utilisé ici signifie opaque au faisceau laser utilisé.

Pour améliorer la qualité des hologrammes obtenus et faciliter leur séparation, un système de lentilles est interposé sur le trajet des faisceaux de référence après recombinaison de ceux-ci, de manière à former l'image de chacun des masques sur la plaque photosensible.

La restitution des hologrammes se fait, de manière connue, en observant la plaque illuminée par un ou plusieurs faisceau(x) ayant mêmes caractéristiques et orientation que le ou les faisceau(x) de référence.

Avantageusement dans le cadre de l'invention, on dispose devant la plaque un masque orientable de sorte qu'une orientation donnée de ce masque orientable corresponde à une direction d'illumination donnée de la pièce.

Selon un deuxième mode de mise en oeuvre de ce procédé, les faisceaux de référence sont déviés de manière à être parallèles mais séparés avant de frapper la plaque.

Dans ce cas, le diamètre des faisceaux de référence et leurs distances relatives sont suffisamment faibles pour que les taches correspondantes sur la plaque puissent être vues simultanément par la caméra utilisée pour la restitution. L'invention a également pour objet un dispositif pour la mise en oeuvre de ce procédé.

Ce dispositif comporte, de manière connue:
- une source laser émettant un faisceau;
- des moyens pour séparer ledit faisceau en un faisceau de référence et au moins un faisceau objet;
- des moyens pour guider le faisceau de référence jusqu'à une plaque photosensible; et
- des moyens pour guider le faisceau objet jusqu'à la pièce à étudier.

Selon la principale caractéristique de ce dispositif, la source laser est une source laser pulsée et il comporte des moyens pour diviser le faisceau de référence en plusieurs faisceaux parcourant des chemins différents.

Dans un premier mode de réalisation, les moyens pour guider le faisceau de référence jusqu'à la plaque photosensible comprennent des moyens pour recombiner lesdits faisceaux de sorte qu'ils soient parallèles et confondus en arrivant sur la plaque photosensible.

Dans ce cas, le dispositif comporte en outre un masque interposé sur le trajet de chacun desdits faisceaux, les masques étant orientés de sorte qu'une partie donnée de l'hologramme obtenu sur la plaque corresponde à l'un desdits faisceaux.

Avantageusement dans ce mode de réalisation, on peut prévoir des moyens pour former l'image des masques sur la plaque photosensible.

Dans un deuxième mode de réalisation, les moyens pour guider le faisceau de référence jusqu'à la plaque photosensible comprennent des moyens pour y amener lesdits faisceaux parallèles et séparés.

Mais d'autres caractéristiques et avantages de l'invention apparaîtront mieux dans la description détaillée qui suit et se réfère aux dessins annexés donnés uniquement à titre d'exemple, et dans lesquels:
- la figure 1 est une vue schématique illustrant le principe de l'enregistrement d'un hologramme;
- la figure 2 est une vue schématique semblable à la figure 1 illustrant le principe de la restitution de l'hologramme;
- la figure 3 est une vue schématique à échelle agrandie semblable aux figures 1 et 2 illustrant le procédé objet de l'invention suivant un premier mode de mise en oeuvre; et
- les figures 4 à 6 représentent différents types d'hologrammes obtenus avec le procédé objet de l'invention.

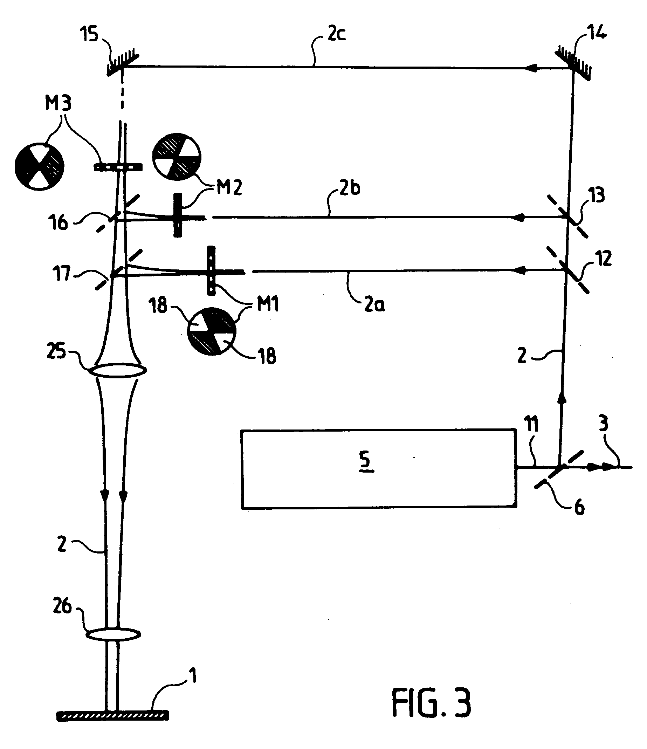

La figure 3 illustre un premier mode de mise en oeuvre du procédé objet de l'invention.

On retrouve la source laser 5 qui émet un faisceau 11. Celle-ci est selon l'invention un laser pulsé tel qu'un laser à rubis double pulse. La lame semi-réfléchissante 6 sépare le faisceau 11 en un faisceau de référence 2 et un faisceau objet 3. Ce dernier est ensuite séparé en trois avant de frapper la pièce à étudier et d'être renvoyé sur la plaque photosensible 1, les trois faisceaux objet et la pièce n'étant pas représentés sur la figure 3.

Deux lames semi-réfléchissantes 12 et 13 permettent de séparer le faisceau de référence en trois faisceaux 2a,2b,2c qui parcourent des chemins différents afin de créer des retards. Par exemple, le trajet du faisceau 2b peut être supérieure de six mètres à celui du faisceau 2a et celui du faisceau 2c supérieur de douze mètres à celui du faisceau 2a.

Des miroirs 14 et 15 interposés sur le trajet du faisceau 2c et des lames semi-réfléchissantes 16 et 17 interposées sur le trajet des faisceaux 2b et 2a permettent de recombiner ces différents faisceaux pour qu'ils soient parallèles et confondus avant de frapper la plaque 1. Plus précisément, la lame semi-réfléchissante 16 permet de recombiner le faisceau 2c avec le faisceau 2b et le faisceau ainsi obtenu est recombiné avec le faisceau 2a grâce à la lame semi-réfléchissante 17.

Des masques M1,M2,M3 sont interposés sur les faisceaux 2a,2b,2c respectivement. Dans l'exemple illustré à la figure 3, ceux-ci se présentent sous la forme de plaques circulaires de diamètre sensiblement égal à celui des faisceaux 2a,2b,2c et percées d'ouvertures 18 en forme de secteurs circulaires. Chaque masque présente deux ouvertures diamétralement opposées et d'angle au sommet 60°, ces ouvertures étant décalées de 60° d'un masque à l'autre afin de couvrir tout l'espace. Bien entendu, d'autres dispositions sont possibles.

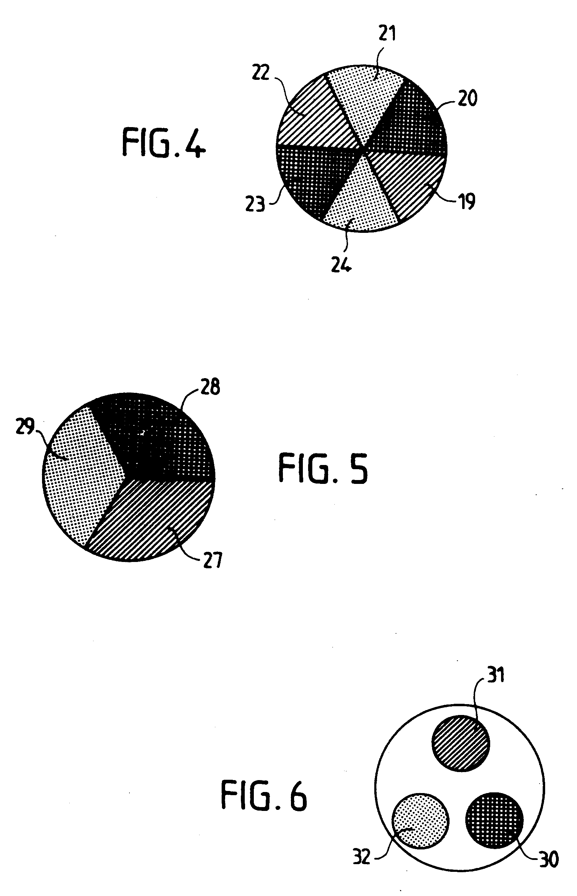

L'hologramme obtenu est illustré à la figure 4 où l'on voit qu'il se compose de six secteurs circulaires d'angle au sommet 60° et numérotés de 19 à 24. Deux secteurs opposés par le sommet correspondent à l'un des faisceaux 2a à 2c: par exemple, les secteurs hachurés 19 et 22 correspondent au faisceau 2a, les secteurs quadrillés 20 et 23 au faisceau 2b et les secteurs en grisé 21 et 24 au faisceau 2c.

L'enregistrement d'un hologramme selon le procédé objet de l'invention se déroule de la manière suivante:
Pendant un pulse du laser, dont la durée est de l'ordre de vingt nanosecondes, les trois faisceaux 2a,2b,2c atteignent successivement la plaque 1 en étant décalés de 60 nanosecondes les uns par rapport aux autres (avec les valeurs de différence de marche indiquées ci-dessus). Chacun interfère avec un faisceau objet correspondant à une direction donnée d'illumination de la pièce. Grâce à la présence des masques M1,M2,M3, on obtient un hologramme ayant l'allure de celui illustré à la figure 4 où chaque couple de secteurs opposés par le sommet correspond à une direction donnée.

Le faisceau 3 est divisé de la même manière que le faisceau 2 avec les mêmes différences de marche. Les trois faisceaux objet ainsi obtenus sont guidés par des miroirs jusqu'à la pièce (cette dernière, les miroirs et les faisceaux objet ne sont pas représentés sur la figure 3). L'emplacement et l'orientation des miroirs sont tels que:
1)- les directions d'illumination ne sont pas coplanaires;
2)- les faisceaux objet parcourent, entre la source laser et la plaque 1, les mêmes distances que les faisceaux de référence, de sorte qu'un faisceau objet correspondant à une certaine direction d'illumination interfère toujours avec le faisceau de référence ayant parcouru la même distance.

Pour réaliser un interférogramme, on enregistre un deuxième hologramme, correspondant à un état différent de la pièce, que l'on superpose au premier. Ce deuxième enregistrement se déroule de la même manière que le premier pendant le pulse suivant du laser qui, avec le matériel choisi, a lieu 5 à 800 microsecondes après le premier.

Pour améliorer la qualité des hologrammes et faciliter la séparation des différents secteurs, on a prévu un système tel qu'un ensemble de deux lentilles 25,26 pour former l'image des masques sur la plaque 1. Bien entendu, la distance entre un masque et la lentille 25, en suivant le faisceau correspondant, devra être la même.

L'observation de l'hologramme obtenu se fait comme illustré à la figure 2, soit à l'oeil nu, soit avec une caméra qui peut être reliée à un ordinateur. Pour séparer les hologrammes obtenus, c'est-à-dire pour n'observer que celui qui correspond à une direction d'illumination donnée, on place devant l'oeil ou la caméra un masque semblable aux masques M1,M2,M3 et on le fait tourner pour n'observer simultanément que deux secteurs opposés.

Comme indiqué plus haut, les masques peuvent avoir des formes différentes. Par exemple, la figure 5 illustre un hologramme à trois secteurs 27,28,29 obtenu avec des masques comportant chacun une seule ouverture en forme de secteur circulaire d'angle au sommet égal à 120°.
Enfin, on ne sortirait pas du cadre de l'invention en n'utilisant pas de masque, mais en acheminant les faisceaux 2a,2b,2c jusqu'à la plaque 1 en les laissant parallèles mais séparés. On obtient ainsi un hologramme tel que celui illustré à la figure 6 qui présente trois taches 30,31,32 correspondant chacune à l'un des faisceaux 2a,2b,2c et donc à une direction d'illumination donnée. Dans ce cas, le diamètre des faisceaux doit être suffisamment faible et ceux-ci suffisamment rapprochés pour que les trois taches puissent être vues simultanément et séparément par la caméra utilisée.

Ainsi, l'invention présente des avantages particulièrement intéressants puisqu'elle permet d'étudier les déformations d'une pièce avec une bonne qualité des hologrammes et sans risque d'erreur. En effet, l'utilisation des masques permet d'obtenir les hologrammes et interférogrammes directement et pratiquement instantanément sans que l'on soit obligé de déplacer la plaque ou la caméra. De plus, il n'y a pas de correction numérique d'image à effectuer et l'utilisation d'un laser pulsé permet d'étudier des pièces en vibration puisqu'un hologramme peut être enregistré à chaque pulse du laser et que la fréquence des pulses peut être très supérieure à celle des vibrations.

Enfin, il est bien entendu que l'invention ne se limite pas aux seuls modes de réalisation décrits et représentés, mais qu'elle en couvre toutes les variantes.

## Revendications

1. Procédé de mesure de déplacements ou de déformations d'une pièce (4), notamment mesure de déplacements tridimensionnels d'une pièce soumise à des vibrations, par interférométrie holographique, dans lequel on enregistre, sur une même plaque photosensible (1), deux hologrammes de la pièce (4) correspondant à deux états différents de celle-ci et, pour un état donné, autant d'hologrammes que de directions d'illumination choisies, chaque hologramme étant obtenu par interférence, sur la plaque (1), entre un faisceau de référence (2) et un faisceau objet (3) renvoyé par la pièce (4), les deux faisceaux étant issus d'une même source laser pulsée (5), caractérisé en ce qu'on enregistre simultanément les interférogrammes correspondant aux différentes directions d'illumination choisies.

2. Procédé selon la revendication 1, appliqué à la mesure des déformations d'une pièce (4) soumise à des vibrations, caractérisé en ce que l'intervalle entre deux pulses consécutifs de la source laser (5) est inférieur à la période des vibrations.

3. Procédé selon l'une quelconque des revendications 1 et 2, caractérisé en ce que les faisceaux de référence (2a,2b,2c) correspondant à chaque direction d'illumination sont issus d'un même faisceau (2) émis par la source laser (5) et séparés à l'aide de lames semi-réfléchissantes (12,13) et parcourent des distances différentes afin d'être retardés les uns par rapport aux autres.

4. Procédé selon la revendication 3, caractérisé en ce que les faisceaux objet sont issus d'un même faisceau (3) émis par la source laser (5) et guidés jusqu'à la pièce (4) de sorte qu'ils parcourent, de la source laser (5) à la plaque (1), les mêmes distances que les faisceaux de référence, afin qu'un faisceau objet correspondant à une direction d'illumination donnée interfère toujours avec le faisceau de référence ayant parcouru la même distance.

5. Procédé selon l'une quelconque des revendications 3 et 4, caractérisé en ce que les faisceaux de référence (2a,2b,2c) sont recombinés et confondus avant de frapper la plaque (1), un masque (M1,M2,M3) percé d'au moins une ouverture (18) étant interposé sur chacun d'eux et orienté de sorte qu'une partie donnée de l'hologramme corresponde à une direction d'illumination donnée.

6. Procédé selon la revendication 5, caractérisé en ce que les masques (M1,M2,M3) se présentent sous la forme de plaques sensiblement circulaires en matériau opaque et percées d'ouvertures (18) en forme de secteurs circulaires.

7. Procédé selon l'une quelconque des revendications 5 et 6, caractérisé en ce qu'un système de lentilles (25,26) est interposé sur le trajet des faisceaux de référence (2a,2b,2c) après recombinaison de ceux-ci, de manière à former l'image de chacun des masques (M1,M2,M3) sur la plaque photosensible (1).

8. Procédé selon l'une quelconque des revendications 5,6 et 7, caractérisé en ce que, la restitution des hologrammes étant effectuée en observant la plaque (1) illuminée par un ou plusieurs faisceaux ayant mêmes caractéristiques et orientation que le ou les faisceau(x) de référence (2a,2b,2c), on dispose devant la plaque (1) un masque orientable de sorte qu'une orientation donnée de ce masque orientable corresponde à une direction d'illumination donnée de la pièce (4).

9. Procédé selon l'une quelconque des revendications 3 et 4, caractérisé en ce que les faisceaux de référence (2a,2b,2c) sont déviés de manière à être parallèles mais séparés avant de frapper la plaque (1).

10. Procédé selon la revendication 9, caractérisé en ce que le diamètre des faisceaux de référence (2a,2b,2c) et leurs distances relatives sont suffisamment faibles pour que les taches correspondantes (30,31,32) sur la plaque (1) puissent être vues simultanément par la caméra utilisée pour la restitution.

11. Dispositif pour la mise en oeuvre du procédé selon l'une quelconque des revendications 1 à 10, comprenant:
- une source laser (5) émettant un faisceau (11);
- des moyens (6) pour séparer ledit faisceau (11) en un faisceau de référence (2), et au moins un faisceau objet (3);
- des moyens pour guider le faisceau de référence (2) jusqu'à une plaque photosensible (1); et
- des moyens pour guider le faisceau objet (3) jusqu'à la pièce à étudier (4).
caractérisé en ce que la source laser (5) est une source laser pulsée et en ce qu'il comporte des moyens (12,13) pour diviser le faisceau de référence (2) en plusieurs faisceaux (2a,2b,2c) parcourant des chemins différents.

12. Dispositif selon la revendication 11, caractérisé en ce que les moyens pour guider le faisceau de référence (2) jusqu'à la plaque photosensible (1) comprennent des moyens (16,17) pour recombiner lesdits faisceaux (2a,2b,2c) de sorte qu'ils soient parallèles et confondus en arrivant sur la plaque photosensible (1).

13. Dispositif selon la revendication 11, caractérisé en ce qu'il comporte en outre un masque (M1,M2,M3) interposé sur le trajet de chacun desdits faisceaux (2a,2b,2c), les masques étant orientés de sorte qu'une partie donnée de l'hologramme obtenu sur la plaque (1) corresponde à l'un desdits faisceaux.

14. Dispositif selon la revendication 13, caractérisé en ce qu'il comporte en outre des moyens (25,26) pour former l'image des masques (M1,M2,M3) sur la plaque photosensible (1).

15. Dispositif selon la revendication 11, caractérisé en ce que les moyens pour guider le faisceau de référence jusqu'à la plaque photosensible (1) comprennent des moyens pour y amener lesdits faisceaux (2a,2b,2c) parallèles et séparés.

## Claims

1. A process for measuring displacements or deformations in an article (4), particularly measuring three-dimensional displacements in an article subject to vibrations, by holographic interferometry, in which there are recorded on the same photosensitive plate (1) two holograms of the article (4) corresponding to two different states of said article and, for a given state, as many holograms as there are illumination directions chosen, each hologram being obtained by interference, on the plate (1), between a reference beam (2) and an object beam (3) reflected by the article (4), the two beams originating from the same pulsed laser source (5), characterised in that the interferograms corresponding to the different illumination directions chosen are recorded simultaneously.

2. A process according to Claim 1, applied to the measurement of deformations in an article (4) subject to vibrations, characterised in that the interval between two consecutive pulses of the laser source (5) is less than the period of the vibrations.

3. A process according to Claims 1 and 2, characterised in that the reference beams (2a, 2b, 2c) corresponding to each direction of illumination originate from the same beam (2) emitted by the laser source (5) and separated with the aid of semi-reflective plates (12, 13), and travel over different distances so as to be delayed relative to each other.

4. A process according to Claim 3, characterised in that the object beams originate from the same beam (3) emitted by the laser source (5) and guided to the article (4) such that they travel, from the laser source (5) to the plate (1), over the same distances as the reference beams, so that an object beam corresponding to a given direction of illumination always interferes with the reference beam that has travelled over the same distance.

5. A process according to any one of Claims 3 and 4, characterised in that the reference beams (2a, 2b, 2c) are recombined and merged before striking the plate (1), a mask (M1, M2, M3) pierced with at least one aperture (18) being interposed on each of them and oriented such that a given portion of the hologram corresponds to a given direction of illumination.

6. A process according to Claim 5, characterised in that the masks (M1, M2, M3) take the form of substantially circular plates made of an opaque material and pierced with apertures (18) in the form of sectors of a circle.

7. A process according to any one of Claims 5 and 6, characterised in that a system of lenses (25, 26) is interposed on the path of the reference beams (2a, 2b, 2c) after they are recombined, so as to form the image of each of the masks (M1, M2, M3) on the photosensitive plate (1).

8. A process according to any one of Claims 5, 6 and 7, characterised in that, the restoration of the holograms being carried out by observing the plate (1) illuminated by one or more beams having the same characteristics and orientation as the reference beam(s) (2a, 2b, 2c), a mask capable of orientation is placed in front of the plate (1) such that a given orientation of this mask capable of orientation corresponds to a given direction of illumination of the article (4).

9. A process according to any one of Claims 3 and 4, characterised in that the reference beams (2a, 2b, 2c) are deflected so as to be parallel but separated before striking the plate (1).

10. A process according to Claim 9, characterised in that the diameter of the reference beams (2a, 2b, 2c) and their relative distances are sufficiently small that the corresponding marks (30, 31, 32) on the plate (1) can be seen simultaneously by the camera used for restoration.

11. A device for implementing the process according to any one of Claims 1 to 10, comprising:
- a laser source (5) emitting a beam (11);
- means (6) for separating said beam (11) into a reference beam (2) and at least one object beam (3);
- means for guiding the reference beam (2) to a photosensitive plate (1); and
- means for guiding the object beam (3) to the article to be studied (4).
characterised in that the laser source (5) is a pulsed laser source and in that it comprises means (12, 13) for dividing the reference beam (2) into several beams (2a, 2b, 2c) travelling over different paths.

12. A device according to Claim 11, characterised in that the means for guiding the reference beam (2) to the photosensitive plate (1) comprise means (16, 17) for recombining said beams (2a, 2b, 2c) such that they are parallel and merged when arriving at the photosensitive plate (1).

13. A device according to Claim 11, characterised in that it further comprises a mask (M1, M2, M3) interposed on the path of each of said beams (2a, 2b, 2c), the masks being oriented such that a given portion of the hologram obtained on the plate (1) corresponds to one of said beams.

14. A device according to Claim 13, characterised in that it further comprises means (25, 26) for forming the image of the masks (M1, M2, M3) on the photosensitive plate (1).

15. A device according to Claim 11, characterised in that the means for guiding the reference beam to the photosensitive plate (1) comprise means for directing thereto said beams (2a, 2b, 2c) which are parallel and separate.

## Patentansprüche

1. Verfahren zur Messung von Verschiebungen oder Verformungen eines Stückes (4), insbesondere zur Messung von dreidimensionalen Verschiebungen eines Stückes, das Vibrationen unterliegt, durch holographische Interferometrie, wobei auf einer und derselben fotosensiblen Platte (1) zwei Hologramme des Stückes (4), die zwei verschiedenen Zuständen des letzteren entsprechen, sowie in einem gegebenen Zustand so viele Hologramme, wie Beleuchtungsrichtungen gewählt wurden, aufgenommen werden, wobei jedes Hologramm durch Interferenz zwischen einem Referenzstrahl (2) und einem von dem Stück (4) zurückgeworfenen Objektstrahl (3) auf der Platte (1) erzielt wird, wobei die beiden Strahlen aus einer und derselben Impulslaserquelle (5) stammen,
dadurch gekennzeichnet, daß die Interferogramme, die den verschiedenen gewählten Beleuchtungsrichtungen entsprechen gleichzeitig aufgenommen werden.

2. Verfahren nach Anspruch 1, das zur Messung der Verformungen eines Stückes (4), das Vibrationen unterliegt, angewendet wird,
dadurch gekennzeichnet, daß der Zeitraum zwischen zwei aufeinanderfolgenden Impulsen der Laserquelle (5) kleiner ist als die Schwingungsdauer der Vibrationen.

3. Verfahren nach einem der Ansprüche 1 und 2,
dadurch gekennzeichnet, daß die Referenzstrahlen (2a, 2b, 2c) die jeder Beleuchtungsrichtung entsprechen, aus einem und demselben, von der Laserquelle (5) abgegebenen Strahl (2) stammen, mit Hilfe von halbreflektierenden Plättchen (12, 13) getrennt werden und verschiedene Strecken zurücklegen, um untereinander verzögert zu werden.

4. Verfahren nach Anspruch 3,
dadurch gekennzeichnet, daß die Objektstrahlen aus einem und demselben, von der Laserquelle (5) abgegebenen Strahl (3) stammen und dergestalt zu dem Stück (4) geleitet werden, daß sie von der Laserquelle (5) bis zu der Platte (1) die gleichen Strecken zurücklegen wie die Referenzstrahlen, so daß ein Objektstrahl, der einer gegebenen Beleuchtungsrichtung entspricht, stets mit dem Referenzstrahl interferiert, der die gleiche Strecke zurückgelegt hat.

5. Verfahren nach einem der Ansprüche 3 und 4,
dadurch gekennzeichnet, daß die Referenzstrahlen (2a, 2b, 2c) wieder zusammengeführt und gebündelt werden, bevor sie auf die Platte (1) treffen, wobei auf ihren Strecken jeweils eine Maske (M1, M2, M3) mit mindestens einer Öffnung (18) angeordnet und dergestalt ausgerichtet ist, daß ein gegebener Teil des Hologramms einer gegebenen Beleuchtungsrichtung entspricht.

6. Verfahren nach Anspruch 5,
dadurch gekennzeichnet, daß die Masken (M1, M2, M3) im wesentlichen als kreisförmige Platten aus lichtundurchlässigem Material ausgeführt sind, die Öffnungen (18) mit der Form von Kreissektoren aufweisen.

7. Verfahren nach einem der Ansprüche 5 und 6,
dadurch gekennzeichnet, daß auf der Strecke der Referenzstrahlen (2a, 2b, 2c) nach deren Zusammenführung ein System von Linsen (25, 26) dergestalt angeordnet ist, daß auf der fotosensiblen Platte (1) die Abbildung jeder der Masken (M1, M2, M3) entsteht.

8. Verfahren nach einem der Ansprüche 5, 6 und 7,
dadurch gekennzeichnet, daß, nachdem die Wiedergabe der Hologranme durch Aufnahme der Platte (1) erfolgt, die durch einen oder mehrere Strahlen mit gleichen Charakteristika und Ausrichtung wie die des oder der Referenzstrahl(en) (2a, 2b, 2c) beleuchtet wird, vor der Platte (1) eine drehbare Maske dergestalt angeordnet wird, daß eine gegebene Drehung dieser drehbaren Maske einer gegebenen Beleuchtungsrichtung des Stückes (4) entspricht.

9. Verfahren nach einem der Ansprüche 3 und 4,
dadurch gekennzeichnet, daß die Referenzstrahlen (2a, 2b, 2c) so abgeleitet werden, daß sie parallel, aber getrennt voneinander verlaufen, bevor sie auf die Platte (1) treffen.

10. Verfahren nach Anspruch 9,
dadurch gekennzeichnet, daß der Durchmesser der Referenzstrahlen (2a, 2b, 2c) und ihre Abstände zueinander klein genug sind, daß die entsprechenden Flecken (30, 31, 32) auf der Platte (1) von der für die Wiedergabe verwendeten Kamera gleichzeitig registriert werden können.

11. Vorrichtung zur Durchführung des Verfahrens nach einem der Ansprüche 1 bis 10, bestehend aus:
- einer Laserquelle (5), die einen Strahl (11) abgibt,
- Mitteln (6) zur Trennung des genannten Strahls (11) in einen Referenzstrahl (2) und mindestens einen Objektstrahl (3),
- Mitteln, um den Referenzstrahl (2) zu einer fotosensiblen Platte (1) zu leiten,
- Mitteln, um den Objektstrahl (3) zu dem zu untersuchenden Stück (4) zu leiten,
dadurch gekennzeichnet, daß die Laserquelle (5) eine Impulslaserquelle ist, und daß sie Mittel (12, 13) aufweist, um den Referenzstrahl (2) in mehrere Strahlen (2a, 2b, 2c) zu teilen, die verschiedene Strecken zurücklegen.

12. Vorrichtung nach Anspruch 11,
dadurch gekennzeichnet, daß die Mittel, um den Referenzstrahl (2) zur fotosensiblen Platte (1) zu leiten, aus Mitteln (16, 17) bestehen, um die genannten Strahlen (2a, 2b, 2c) dergestalt wieder zusammenzuführen, daß sie parallel und gebündelt sind, wenn sie auf die Platte (1) treffen.

13. Vorrichtung nach Anspruch 11,
dadurch gekennzeichnet, daß sie ferner eine Maske (M1, M2, M3) auf der Strecke jeder der genannten Strahlen (2a, 2b, 2c) aufweist, wobei die Masken dergestalt ausgerichtet sind, daß ein gegebener Teil des auf der Platte (1) erzielten Hologramms einem der genannten Strahlen entspricht.

14. Vorrichtung nach Anspruch 13,
dadurch gekennzeichnet, daß sie ferner Mittel (25, 26) aufweist, um die Abbildung der Masken (M1, M2, M3) auf der fotosensiblen Platte (1) zu schaffen.

15. Vorrichtung nach Anspruch 11,
dadurch gekennzeichnet, daß die Mittel, um den Referenzstrahl (2) zur fotosensiblen Platte (1) zu leiten, aus Mitteln bestehen, um die genannten Strahlen (2a, 2b, 2c) parallel und getrennt voneinander dorthin zu führen.
